**Europäisches Patentamt**

**European Patent Office**

**Office européen des brevets**

(19)

(11) Veröffentlichungsnummer : **0 382 885 B1**

(12)

# EUROPÄISCHE PATENTSCHRIFT

(45) Veröffentlichungstag der Patentschrift :
**14.10.92 Patentblatt 92/42**

(51) Int. Cl.$^5$ : **A01M 7/00,** B05B 15/04

(21) Anmeldenummer : **89114138.4**

(22) Anmeldetag : **01.08.89**

(54) **Fahrbares Spritzgerät zum Ausbringen von Chemikalien auf in parallelen Reihen wachsende Pflanzen.**

(30) Priorität : **24.05.89 DE 8906405 U**

(43) Veröffentlichungstag der Anmeldung :
**22.08.90 Patentblatt 90/34**

(45) Bekanntmachung des Hinweises auf die
Patenterteilung :
**14.10.92 Patentblatt 92/42**

(84) Benannte Vertragsstaaten :
**AT CH DE FR IT LI NL**

(56) Entgegenhaltungen :
**EP-A- 0 327 037**
**DE-A- 3 738 518**

(56) Entgegenhaltungen :
**DE-U- 8 127 328**
**DE-U- 8 412 145**
**FR-A- 2 598 941**
**FR-A- 2 606 672**

(73) Patentinhaber : **Walter, Helga**
**Hauptstrasse 15**
**W-6749 Pleisweiler-Oberhofen (DE)**

(72) Erfinder : **Walter, Ernst**
**Hauptstrasse 15**
**W-6749 Pleisweiler-Oberhofen (DE)**

(74) Vertreter : **Patentanwälte Dipl.-Ing. F.W. Möll**
**Dipl.-Ing. H.Ch. Bitterich**
**Langstrasse 5 Postfach 2080**
**W-6740 Landau/Pfalz (DE)**

EP 0 382 885 B1

## Beschreibung

Die Erfindung betrifft ein fahrbares Spritzgerät zum Ausbringen von Chemikalien auf in parallelen Reihen wachsende Pflanzen, insbesondere im Wein- und Obstbau, gemäß dem Oberbegriff des Anspruchs 1 und DE-U-81 27 328.

Derartige Spritzgeräte sind als Anbaugeräte, als Anhänger oder als Selbstfahrer handelsüblich. Sie dienen dazu, Pflanzenschutzmittel so auszubringen, daß mit möglichst geringem Chemikalieneinsatz eine möglichst optimale Schutzwirkung erreicht wird. In allen Fällen enthält das Spritzgerät einen Tank zur Aufnahme der Chemikalienflüssigkeit, eine Pumpe sowie eine Anzahl von Zerstäuberdüsen, wobei diese Teile durch Rohr- oder Schlauchleitungen miteinander verbunden sind. Außerdem besitzen diese Geräte ein Rührwerk, welches die Chemikalienflüssigkeit im Tank derart rührt, daß sich die gelösten Chemikalien nicht vom Wasser trennen. Im einfachsten Fall wird hierzu ein Teil der von der Pumpe angesaugten Chemikalienflüssigkeit wieder in den Tank zurückgespritzt.

Da beim einfachen Aufspritzen der Chemikalienflüssigkeit auf die Pflanzenreihen im allgemeinen nur die Blattoberseiten benetzt werden, die Wirkung der Chemikalien jedoch erheblich besser ist, wenn die Blattunterseite benetzt wird, besitzen die meisten Spritzgeräte zusätzlich ein Axial- oder Radialgebläse, welches einen kräftigen Luftstrom erzeugt. Dieser verwirbelt die in den Düsen zerstäubte Chemikalienflüssigkeit und trägt sie in feinster Verteilung auch in höhere Pflanzenteile. Im wesentlichen sorgt der Luftstrom jedoch dafür, daß das Laubwerk der Pflanzen in Bewegung gerät, so daß eine allseitige Benetzung stattfindet.

Bei der Verwendung dieser Spritzgeräte wird ein erheblicher Anteil der zerstäubten Chemikalienflüssigkeit nicht wie an sich gewünscht auf den Pflanzen angelagert. Dies gilt insbesondere dann, wenn die Pflanzen bei der Winter- oder Frühjahrsspritzung kein oder wenig Laub tragen. Wie die Erfahrung zeigt, gelangen ca. 50 % der zerstäubten Chemikalienflüssigkeit auf das Erdreich oder werden mit dem Wind verweht. Hierdurch werden sowohl die Umwelt als auch der Geldbeutel belastet.

Aus diesem Grunde sind bereits Spritzgeräte im Einsatz, die an einem die Pflanzenreihen übergreifenden Gestänge Schirmbleche mitführen. Diese Schirmbleche sind entsprechend der Richtung der zerstäubten Chemikalienflüssigkeit auf der Rückseite der angeströmten Pflanzenreihen positioniert. Sie sollen den Teil der Chemikalienflüssigkeit, der sich nicht auf den Pflanzen ablagert, auffangen. Die an den Schirmblechen herunterlaufende Chemikalienflüssigkeit wird unten von einer Sammelrinne gesammelt und mit Hilfe einer Rücksaugleitung in den Chemikalientank zurückgeleitet.

Die Erfahrung zeigt jedoch, daß sich nur dann an den Schirmblechen Flüssigkeit abscheidet, wenn ohne Gebläse gearbeitet wird. Bei Spritzgeräten, die mit Gebläse und insbesondere mit Radialgebläse ausgerüstet sind, zeigen die Schirmbleche praktisch keine Wirkung; aufgrund der hohen Luftgeschwindigkeiten kann sich die Flüssigkeit nicht an den Schirmblechen abscheiden.

Aus der älteren, jedoch nicht vorveröffentlichten EP-A-0 327 037 ist ein Spritzgerät bekannt, bei dem die Wand der Schirms als Hohlwandung ausgebildet ist. Die Innenseiten der Wandungen sind mit Lamellen, Siebgeweben, Netzen oder dergleichen versehen, die verhindern sollen, daß die mit der Luftströmung aufprallende Chemikalienflüssigkeit reflexionsartig zurückspritzt. Die Chemikalien werden mit einer starken Saugluftströmung aus der Hohlwand des Schirms abgesaugt und in einem besonderen Abscheider von der Luftströmung getrennt.

Der vorliegenden Erfindung liegt die Aufgabe zugrunde, ein Spritzgerät der eingangs gennanten Art dahingehend weiterzubilden, daß eine optimale Flüssigkeitsabscheidung erreicht wird.

Diese Aufgabe wird gelöst durch die Ausbildung der Schirme gemäß Merkmalen des Anspruchs 1.

Dadurch, daß die Luftströmung nicht gegen eine geschlossene Fläche gerichtet ist, sondern gegen ein Labyrinth von Lamellen mit etwa W-förmigem Querschnitt, die die Luftströmung mehrfach umlenken, scheidet sich die enthaltene Flüssigkeit an den Lamellenwänden praktisch vollständig ab. Die abgeschiedene Flüssigkeit läuft dann an den lamellen entlang in die Sammelrinne und wird wie an sich bekannt über die Rücksaugleitung in den Chemikalientank zurückgefördert. Es kann also wieder auf die Spritztechnik mit Luftgebläse zurückgegriffen werden, die wie schon erwähnt optimale Ergebnisse bringt. Die Chemikalienmenge, die sich nicht auf den Pflanzen ablagert, wird jedoch praktisch vollständig wiedergewonnen.

Gemäß einer vorteilhaften Ausgestaltung der Erfindung sind die Lamellen in einem Rahmen, vorzugsweise aus Edelstahl, aus Profilleisten mit U-förmigem Querschnitt gehalten. Eine solche Konstruktion ist trotz geringen Gewichtes ausreichend stabil und außerdem chemikalienfest. Vorteilhafterweise sind die Lamellen mit vorzugsweise einstückigen Abstandshaltern für gleiche gegenseitige Abstände ausgerüstet. Hierdurch wird die Montage erleichtert und der Luftstrom findet überall identische Strömungsquerschnitte.

Gemäß einer ersten Variante der Erfindung sind die Lamellen senkrecht zum Erdboden angeordnet. Dabei kann der Schirm in der Höhe durch Zwischenflüssigkeitssammelrinnen unterteilt werden. Diese Maßnahme empfiehlt sich, wenn die Schirme eine große Höhe besitzen und der an den Lamellen herablaufende Flüssigkeitsfilm so dick wird, daß er von der zwischen den Lamellen durchströmenden Luft wieder mitgerissen würde.

Um zu verhindern, daß die Rücksaugleitung und die Saugpumpe durch Schmutzpartikel verstopfen, empfiehlt sich die Anordnung eines Siebes in der unteren Sammelrinne.

Gemäß einer vorteilhaften Ausgestaltung der Erfindung sind auf dem Chassis Pfosten errichtet, von denen jeweils zwei am oberen Ende gelenkig angebrachte Längstraversen verbunden sind. Zwischen den Längstraversen ist eine Schere montiert, die mittels Hydraulikzylinder, der von der Bordhydraulik aus betätigt wird, zu öffnen und zu schließen ist. An den Längstraversen sind dann die Schirme befestigt. Mit Hilfe dieser Konstruktion werden die Schirme auf die gegenseitigen Anstände der zu behandelnden Pflanzenreihen eingestellt. Diese Konstruktion ist leicht, stabil und kann vor allem nicht klemmen, auch nicht, wenn einer der Schirme im Betrieb anstoßen sollte.

Die Schirme ihrerseits sind vorteilhafterweise über je ein Parallelogramm-Gestänge, welches von der Bordhydraulik verschwenkbar ist, mit den Längstraversen verbunden. Mit Hilfe des Parallelogramm-Gestänges werden die Schirme an das Spritzgerät beigezogen, wenn nach Behandlung einer Pflanzenreihe das Fahrzeug gewendet wird, um in die nächste Pflanzenreihe einzufahren. Dabei liegt der Vorteil des zusätzlichen Parallelogramm-Gestänges darin, daß der einmal eingestellte Abstand der Schirme sich automatisch immer wieder einstellt, wodurch die Handhabung für den Fahrzeugführer erleichtert und der Wendevorgang beschleunigt wird.

Zum Rücksaugen der an den Schirmen abgeschiedenen Chemikalienflüssigkeit ist vorzugsweise eine Injektorpumpe vorgesehen, die von der Zerstäuberpumpe betätigt ist.

Anhand der Zeichnung soll die Erfindung in Form eines Ausführungsbeispiels näher erläutert werden. Es zeigen jeweils in schematischer Form

Fig. 1 eine Draufsicht auf einen ersten Schirm zum Abscheiden der Chemikalienflüssigkeit,

Fig. 2 einen Querschnitt durch die Lamellen, wie sie im Schirm in der Fig. 1 verwendet sind,

Fig. 3 ein fahrbares Spritzgerät in Seitenansicht,

Fig. 4 das fahrbare Spritzgerät der Fig. 3 in Draufsicht und

Fig. 5 das fahrbare Spritzgerät der Fig. 3 und 4 in Rückansicht beim praktischen Einsatz.

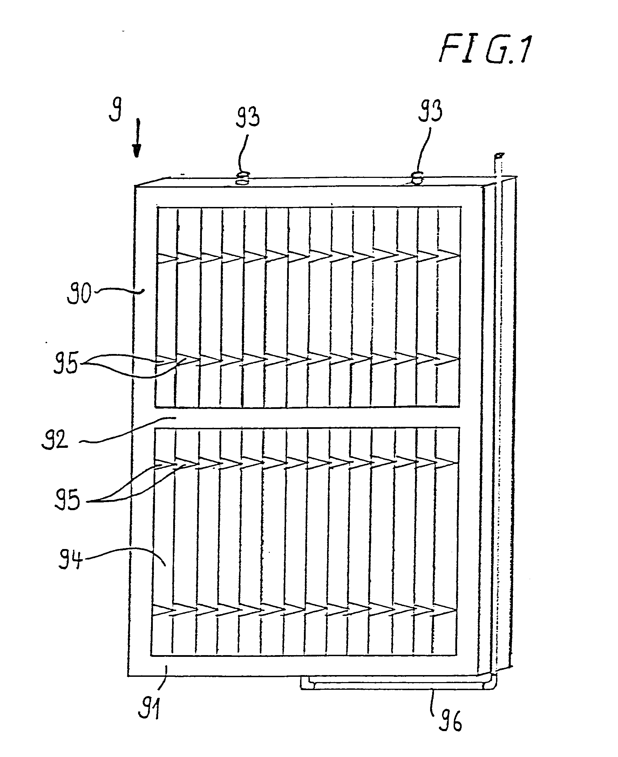

Fig. 1 zeigt eine Draufsicht auf einen perspektivisch dargestellten Schirm 9. In einem Rahmen 90, vorzugsweise aus Edelstahl, mit U-förmigem Querschnitt sind eine Vielzahl von senkrechten Lamellen 94 gestapelt, wobei vorzugsweise an den Lamellen 94 angeformte Abstandshalter 95 für gleiche gegenseitige Abstände sorgen. Am unteren Ende des Rahmens 90 ist eine Sammelrinne 91 mit integriertem Sieb ausgebildet, von der eine Rücksaugleitung 96 abgeht.

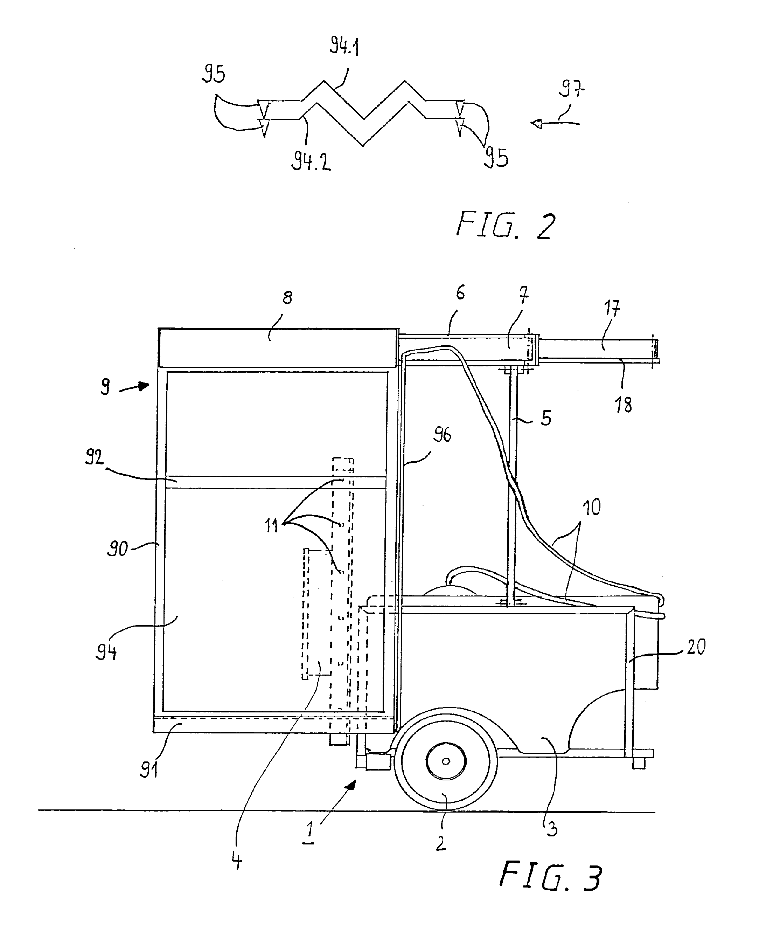

Wie Fig. 2 zeigt, besitzen die lamellen 94 einen etwa W-förmigen Querschnitt. Dank der gegenseitigen Abstände kann die mit der Chemikalienflüssigkeit beladene luft, symbolisiert durch den Pfeil 97, zwischen den Lamellen 94 passieren. Während der mehrfachen Umlenkung des Luftstromes scheidet sich die darin enthaltene Flüssigkeit praktisch völlig an den Wänden der lamellen 94 ab und läuft unter dem Einfluß der Schwerkraft in die untere Sammelrinne 91 mit Sieb, um anschließend wie schon erwähnt mit Hilfe der Rücksaugleitung 96 wieder in den Tank 3 des Spritzgerätes 1 gefördert zu werden.

Aufhängevorrichtungen 93 am oberen Ende des Schirmes 9 dienen zur Verbindung mit einer Aufhängung am Spritzgerät.

Falls bei hohen Schirmen 9 mit entsprechend Langen Lamellen 94 Gefahr besteht, daß der an diesen herablaufende Flüssigkeitsfilm so dick wird, daß unter der Wirkung des hindurchströmenden Luftstroms wieder Flüssigkeit mitgerissen wird, wird die Höhe durch den zusätzlichen Einbau von Zwischenflüssigkeitssammelrinnen 92 verringert.

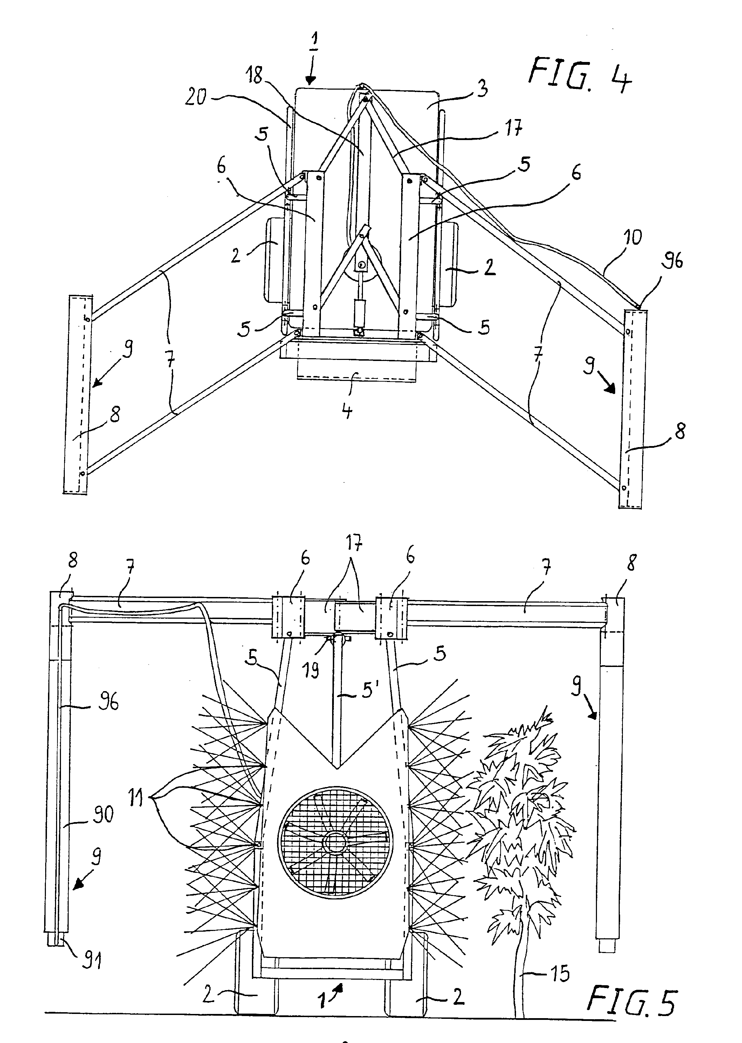

Die Fig. 3, 4 und 5 zeigen in Seitenansicht, Draufsicht und Rückansicht ein Spritzgerät 1 zur Behandlung von Pflanzenreihen 15. Auf einem Fahrwerk 2 ist ein Tank 3 für die Chemikalienflüssigkeit montiert. Am Heck des Spritzgerätes 1 ist ein Gebläse 4 angeordnet, welches die Luft axial ansaugt und seitlich auf die Pflanzenreihen 15 bläst. An der Peripherie des Gebläses 4 erkennt man eine Reihe von Spritzdüsen 11, die die mit Hilfe einer (nicht dargestellten) Pumpe aus dem Tank angesaugte Chemikalienflüssigkeit auf die Pflanzenreihen 15 zerstäuben. Der Luftstrom aus dem Gebläse 4 bewegt das Blattwerk der Pflanzen 15, so daß alle Pflanzenteile gleichmäßig und vollständig mit Chemikalienflüssigkeit benetzt werden.

Auf dem Fahrwerk 2 und um den Tank 3 des Spritzgerätes 1 herum ist ein Rohrrahmen 20 montiert. Dieser Rohrrahmen 20 wird an das jeweilige Spritzgerät individuell angepaßt. Auf dem Rohrrahmen 20 sind vier Pfosten 5 errichtet, von denen je zwei an ihrem oberen Ende eine Längstraverse 6 tragen. Die Pfosten 5 sind gegenüber dem Rohrrahmen 20 und den Längstraversen 6 beweglich gelagert.

Zwischen den längstraversen 6 ist ein Scherengestänge 17 montiert, bestehend aus zwei Scheren, die über eine Längsverbindung 18 gekoppelt sind. Zwischen der Längsverbindung 18 und einem stabilen Pfosten 5' ist ein Hydraulikzylinder 19 montiert. Beim Ein- und Ausfahren des Hydraulikzylinders 19 öffnet bzw. schließt sich die Schere 17, 18. Dadurch wird der gegenseitige Abstand der Längstraversen 6 verändert, wobei diese jedoch zueinander exakt parallel bleiben.

An den Längstraversen 6 sind über je ein Parallelogrammgestänge 7 mit Aufhängung 8 die Schirme 9 angelenkt. Dabei hängen die Schirme 9 so, daß die aus den Düsen 11 versprühte Chemikalienflüssigkeit, die sich nicht auf den Pflanzenreihen 15 ablagert, die Schirme 9 trifft, wo sie aus dem Luftstrom abgeschieden wird.

Die Schirme 9 besitzen an ihrem unteren Ende eine Sammelrinne 91. Die gesammelte Flüssigkeit wird über eine Rücksaugleitung 96 am Schirm 9 sowie über Schlauchleitungen 10 in den Tank 3 zurückgepumpt. Um zu verhindern, daß mit der Flüssigkeit auch Fremdkörper, beispielsweise Pflanzenteile, angesaugt werden, was zu einer Verstopfung der Rücksaugleitung 10, 96 oder zu einer Verschmutzung des Tankinhalts führen wurde, ist die Sammelrinne 91 zunächst mit einem Sieb ausgerüstet. Außerdem wird die rückgesaugte Flüssigkeit in das stets vorhandene Tankeinfüllsieb geleitet und hier nochmals gereinigt, bevor sie sich mit dem übrigen Tankinhalt vermischt.

Das Rücksaugen der am Schirm 9 abgeschiedenen Flüssigkeit geschieht im einfachsten Fall mit Hilfe einer Injektor-Pumpe, die von der die Spritzdüsen 11 beaufschlagenden Hochdruckpumpe betätigt wird.

Die Scherenkonstruktion am oberen Ende des Gestänges 5 dient dazu, die Abstände zwischen dem Fahrzeug 1 und den Schirmen 9 entsprechend dem Abstand der Pflanzenreihen 15 einzustellen.

Mit Hilfe des Parallelogramm-Gestänges 7 können die Schirme 9 schnell und einfach an die Seiten des Fahrzeugs 1 beigeschwenkt werden, beispielsweise bei der Fahrt auf der Straße oder beim Wenden am Ende einer Pflanzenreihe. Nach dem Wiederausfahren des Parallelogramm-Gestänges 7, vorzugsweise mit Hilfe der Bord-Hydraulik, ist die einmal eingestellte Arbeitsbreite sofort wieder erreicht, ohne daß der Fahrzeugführer steuernd eingreifen müßte. Zum Verschwenken des Parallelogrammgestänges können wieder Hydraulikzylinder eingesetzt werden. Es sind aber auch Getriebekonstruktionen mit Zahnstange und Zahnrad erfolgreich einsetzbar.

Wie Versuche gezeigt haben, ist die auf der Rückseite der Schirme 9 austretende Luft praktisch frei von Flüssigkeit. Die Ersparnis an Chemikalien und die daraus resultierende Schonung der Umwelt sind optimal.

**Patentansprüche**

1. Fahrbares Spritzgerät zum Ausbringen von Chemikalien auf in parallelen Reihen wachsende Pflanzen (15), insbesondere im Wein- und Obstbau, umfassend einen Tank (4) zur Aufnahme und eine Pumpe zum Zerstäuben der Chemikalienflüssigkeit mittels Zerstäuberdüsen (11), ein Gebläse (3) zum Erzeugen einer starken, auf die Pflanzen (15) gerichteten Luftströmung zum Verwirbeln der Chemikalienflüssigkeit und auf der Rückseite der angeströmten Pflanzenreihen (15) positionierte, über ein Gestänge (5, 6, 7, 8) mit dem Fahrzeugchassis (20) verbundene Schirme (9), die eine Flüssigkeitssammelrinne (91) und eine Rücksaugleitung (96) für Chemikalienflüssigkeit aufweisen, dadurch gekennzeichnet, daß die Schirme (9) eine Vielzahl von mit gegenseitigem Abstand angeordneten Lamellen (94) mit etwa W-förmigem Querschnitt, die die Luftströmung mehrfach umlenken, aufweisen.

2. Spritzgerät nach Anspruch 1, dadurch gekennzeichnet, daß die Lamellen (94) in einem Rahmen (90), vorzugsweise aus Edelstahl, aus Profilleisten mit U-förmigem Querschnitt gehalten sind.

3. Spritzgerät nach Anspruch 1 oder 2, dadurch gekennzeichnet, daß die Lamellen (94) mit vorzugsweise einstückigen Abstandshaltern (95) für gleiche gegenseitige Abstände ausgerüstet sind.

4. Spritzgerät nach Anspruch 1, 2 oder 3, dadurch gekennzeichnet, daß die Lamellen (94) senkrecht zum Erdboden angeordnet sind.

5. Spritzgerät nach Anspruch 4, dadurch gekennzeichnet, daß die Schirme (9) in der Höhe durch Zwischenflüssigkeitssammelrinnen (92) unterteilt sind.

6. Spritzgerät nach einem der Ansprüche 1 bis 5, dadurch gekennzeichnet, daß die untere Sammelrinne (91) mit einem Sieb ausgerüstet ist.

7. Spritzgerät nach einem der Ansprüche 1 bis 6, dadurch gekennzeichnet, daß auf dem Fahrzeugchassis (20) Pfosten (5) errichtet sind, daß die oberen Enden der Pfosten (5) jeder Seite mit Hilfe zweier Längstraversen (6) gelenkig miteinander verbunden sind, daß zwischen den beiden Längstraversen (6) ein Scherengestänge (17) montiert ist, daß das Scherengestänge (17) mittels Hydraulikzylindern (19) zu öffnen und zu schließen ist und daß die Schirme (9) an den Längstraversen (6) befestigt sind.

8. Spritzgerät nach Anspruch 7, dadurch gekennzeichnet, daß die Schirme (9) über je ein Parallelogramm-Gestänge (7), welches von einer Bord-Hydraulik verschwenkbar ist, mit den Längstraversen (6) verbunden sind.

9. Spritzgerät nach einem der Ansprüche 1 bis 8, dadurch gekennzeichnet, daß eine Injektorpumpe vorgesehen ist, die von der Zerstäuberpumpe betätigt ist und die an den Schirmen (9) abgeschiedene Chemikalienflüssigkeit aus der Sammelrinne (91) über die Rücksaugleitung (96, 10) in ein Tankeinfüllsieb des Tanks (4) pumpt.

## Claims

1. A portable spray unit for bringing chemicals out to plants (15) growing in parallel rows, especially in vineyards and orchards, comprising a tank (4) for receiving and a pump for atomizing the liquid chemicals by means of atomizer nozzles (11), a blower (3) for generating a strong airstream directed at the plants (15) for swirling the liquid chemicals, and screens (9) connected to the vehicle chassis (20) via a linkage (5, 6, 7, 8), which are positioned at the rear of the rows of plants (15) being blown against and exhibit a trough (91) for collecting liquid and a return suction line (96) for liquid chemicals, characterized in that the screens (9) exhibit a plurality of blades (94) arranged at intervals and having a roughly W-shaped cross-section, which deflect the airstream a number of times.

2. A spray unit as in Claim 1, characterized in that the blades (94) are held in a frame (90) of channel sections, preferably of stainless steel.

3. A spray unit as in Claim 1 or 2, characterized in that the blades (94) are equipped with spacers (95) made preferably in one piece, for constant mutual pitch.

4. A spray unit as in Claim 1, 2 or 3, characterized in that the blades (94) are arranged perpendicular to the ground.

5. A spray unit as in Claim 4, characterized in that the screens (9) are subdivided in height by intermediate troughs (92) for collecting liquid.

6. A spray unit as in one of the Claims 1 to 5, characterized in that the bottom collecting-trough (91) is equipped with a sieve.

7. A spray unit as in one of the Claims 1 to 6, characterized in that posts (5) are erected on the vehicle chassis (20), that the top ends of the posts (5) on each side are connected together in a hinge by means of two longitudinal bars (6), that a scissors linkage (17) is mounted between the two longitudinal bars (6), that the scissors linkage (17) is made to open and close by means of hydraulic cylinders (19) and that the screens (9) are fastened to the longitudinal bars (6).

8. A spray unit as in Claim 7, characterized in that the screens (9) are connected to the longitudinal bars (6) via a parallelogram linkage (7) which may be swivelled by a hydraulic equipment on board.

9. A spray unit as in one of the Claims 1 to 8, characterized in that an injector pump is provided which is actuated by the atomizer pump and pumps the liquid chemical deposited on the screens (9), out of the collecting-trough (91) via the return suction line (96, 10) into a sieve in the filler on the tank (4).

## Revendications

1. Pulvérisateur mobile pour épandre des produits chimiques sur des plantes (15) disposées en rangées parallèles, en particulier en viticulture et dans les cultures fruitières, comportant un réservoir (4), destiné à recevoir le liquide chimique, et une pompe pour vaporiser celui-ci au moyen de buses de pulvérisation (11), un ventilateur (3) pour produire un fort courant d'air, dirigé vers les plantes (15), en vue de faire tourbillonner le liquide chimique et des écrans (9), positionnés à l'arrière des rangées de plantes (15) soumises au courant, reliés par une tringlerie (5, 6, 7, 8) au châssis (20) du véhicule, lesquels écrans comportent un collecteur de liquide (91) et une conduite de recirculation (96) du liquide chimique, caractérisé en ce que les écrans (9) présentent un grand nombre de lamelles (94), disposées espacées les unes des autres, de section transversale à peu près en W, qui dévient plusieurs fois le courant d'air.

2. Pulvérisateur selon la revendication 1, caractérisé en ce que les lamelles (94) sont maintenues dans un cadre (90), de préférence en acier spécial, constitué de baguettes profilées, de section transversale en U.

3. Pulvérisateur selon la revendication 1 ou 2, caractérisé en ce que les lamelles (94) sont équipées d'écarteurs (95), de préférence d'une seule pièce, pour maintenir des écartements égaux.

4. Pulvérisateur selon les revendications 1, 2 ou 3, caractérisé en ce que les lamelles (94) sont perpendiculaires au sol.

5. Pulvérisateur selon la revendication 4, caractérisé en ce que les écrans (9) sont subdivisés, en hauteur, par des collecteurs intermédiaires de liquide (92).

6. Pulvérisateur selon l'une des revendications 1 à 5, caractérisé en ce que le collecteur inférieur (91) est équipé d'un filtre.

7. Pulvérisateur selon l'une des revendications 1 à 6, caractérisé en ce que des poteaux (5) sont dressés sur le châssis (20) du véhicule, en ce que les extrémités supérieures des poteaux (5), de chaque côté, sont reliées entre elles, de manière articulée, au moyen de deux traverses longitudinales (6), en ce qu'une tringlerie en ciseaux (17) est montée entre les deux traverses longitudinales (6), en ce que la tringlerie en ciseaux (17) s'ouvre et se ferme au moyen de vérins hydrauliques (19) et en ce que les écrans (9) sont fixés sur les traverses longitudinales (6).

8. Pulvérisateur selon la revendication 7, caractérisé en ce que les écrans (9) sont reliés aux traverses longitudinales (6), chacun par une tringlerie en parallélogramme (7) qui peut pivoter au moyen d'un circuit hydraulique de bord.

9. Pulvérisateur selon l'une des revendications 1 à 8, caractérisé en ce qu'il est prévu une pompe à injection qui est actionnée par la pompe de pulvérisation et qui envoie le liquide chimique, séparé sur les écrans (9), à partir du collecteur (91), per la conduite de recirculation (97, 10), dans un filtre de remplissage du réservoir (4).

FIG.1

FIG. 2

FIG. 3

FIG. 4

FIG.5